# EUROPEAN PATENT SPECIFICATION

(11) **EP 2 406 522 B1**
(45) Date of publication and mention of the grant of the patent: **17.04.2013**
(21) Application number: 10705041.1
(22) Date of filing: 11.02.2010
(51) Int. Cl.: F16H 1/12, F16H 1/16, F16H 55/22

(54) **HYBRID ENVELOPING SPIROID AND WORM GEAR**
HYBRID-HYPOID UND SCHNECKENGETRIEBE
ENGRANAGE À VIS SANS FIN ET HYPOIDE HYBRIDE

(30) Priority: 10.03.2009 US 158801 P
(43) Date of publication of application: 18.01.2012
(73) Proprietor: Illinois Tool Works Inc., Glenview, IL 60026 (US)
(72) Inventor: KAZKAZ, Ghaffar, Glenview IL 60026 (US); PUPPALA, Madhav, Glenview IL 60026 (US); RICHARD, Didier, Glenview IL 60026 (US)
(74) Representative: Meissner, Bolte & Partner
(86) International application number: PCT/US2010/023896
(87) International publication number: WO 2010/104640

(56) References cited:
- SU-A1- 1 479 764
- US-A- 4 226 136
- US-A1- 2005 274 216
- US-A1- 2008 016 974

## Description

### BACKGROUND OF THE INVENTION

The present invention relates to an enveloping gear arrangement and more particularly, to an enveloping gear arrangement that uses a spiroid and worm gear arrangement, according to the preamble of claim 1 and as it is disclosed in US 20050274216 A.

Gears are one of the fundamental mechanical machines and have been in use for centuries. Gears are used to, among other things, transmit power from one device to another and change the direction of force.

Many types of gears are known - straight gears, angle gears, bevel gears, worm gears, combinations of these and others. Also known are SPIROID® brand gears that use a curved gear tooth. Such a configuration permits larger loads to be transferred due to the increased surface area of gear tooth relative to a straight gear formed on a similar blank.

Certain applications require gears that must withstand high loads (forces). Generally, the ability to withstand such forces is accomplished by using larger gears to increase the area on the gear teeth over which the forces are exerted. The ability to withstand forces must be balanced against the size requirements, or conversely the size limitations, of the gear assembly. While the spiroid gear accomplishes this, at times, even smaller size requirements must be met. One such gear tooth form is disclosed in Saari, U.S. Patent No. 3,631,736, commonly assigned with the present application and incorporated herein by reference.

Accordingly, there is a need for a gear system that can withstand high loads/forces in a limited or small size application. Desirably, such a gear can be formed from non-metallic, e.g., polymeric materials.

### SUMMARY OF THE INVENTION

A hybrid spiroid and worm gear is formed having the features of claim 1.

It has been found that the present hybrid spiroid and worm gear provides a significant increase in torque capability for gearing without increasing the size of the gears.

In a preferred embodiment, the gear body is formed having a pair of substantially opposing surfaces in which the spiroid gear teeth are formed a central hub, with the worm gear teeth formed between the opposing surfaces in the hub. The gear can be formed with a gap between the spiroid gear teeth and the worm gear teeth.

A present gear body is formed as two parts joined to one another at the hub. The two parts can be substantially identical to one another. The parts can be joined by press-fitting, welding, adhesive, fasteners or the like.

The worm gear teeth can be formed having a profile that is different from or the same as the profile of the spiroid gear teeth, where the profile is defined by a height and/or a pitch of the gear teeth.

A preferred gear is formed from a polymeric material, such as acetal material or the like.

The hybrid spiroid and worm gear is configured to mesh with a pinion disposed at an angle that is other than normal to an axis of the gear body. The pinion can be formed with first and third spaced apart thread forms configured to mesh with the opposing surface spiroid gear teeth and an intermediately disposed, second thread form configured to mesh with the gear worm teeth. The pinion first and third thread forms are preferably identical. The second thread form can be different from or identical to the first and third thread forms. The first, second and third thread forms can also be formed as a continuous thread form in the pinion.

One method for making the hybrid spiroid and worm gear is to form the first gear body part, form the second gear body part and join the first and second gear body parts to form the hybrid spiroid and worm gear. The first and second body parts can be formed identical to one another.

These and other features and advantages of the present invention will be apparent from the following detailed description, in conjunction with the appended claims.

### BRIEF DESCRIPTION OF THE PHOTOGRAPHS

The benefits and advantages of the present invention will become more readily apparent to those of ordinary skill in the relevant art after reviewing the following detailed description and accompanying drawings, wherein:

Fig. 1 is a top perspective view of a hybrid enveloping spiroid and worm gear (shown without the complementary pinion) embodying the principles of the present invention;

Fig. 2 is an enlarged view similar to Fig. 1;

Fig. 3 is a top view into the center of the gear assembly, looking at the central worm gear;

Fig. 3 A is an enlarged view of a tooth on the worm gear;

Fig. 4 is a view similar to Fig. 3 and also illustrating one pinion that can be used with the hybrid spiroid and worm gear;

Fig. 5 is a view of the pinion in place in the hybrid spiroid and worm gear, the pinion being skewed relative to the hybrid spiroid and worm gear axis;

Fig. 6 is an enlarged view of the pinion and hybrid spiroid and worm gear of (and as seen from an angle rotated about 90 degrees relative to) Fig. 5;

Figs. 7A, 7B and 7C are sectional views taken along lines 7A-7A, 7B--7B, and 7C--7C, respectively, in Fig. 6;

Fig. 8 is a view looking substantially along the pinion as it resides in the hybrid spiroid and worm gear; and

Fig. 9 is an illustration of a testing apparatus used to obtain torque data for the hybrid spiroid and worm gear and pinion assembly.

### DETAILED DESCRIPTION OF THE INVENTION

While the present invention is susceptible of embodiment in various forms, there is shown in the drawings and will hereinafter be described a presently preferred embodiment with the understanding that the present disclosure is to be considered an exemplification of the invention and is not intended to limit the invention to the specific embodiment illustrated.

It should be understood that the title of this section of this specification, namely, "Detailed Description Of The Invention", relates to a requirement of the United States Patent Office, and does not imply, nor should be inferred to limit the subject matter disclosed herein.

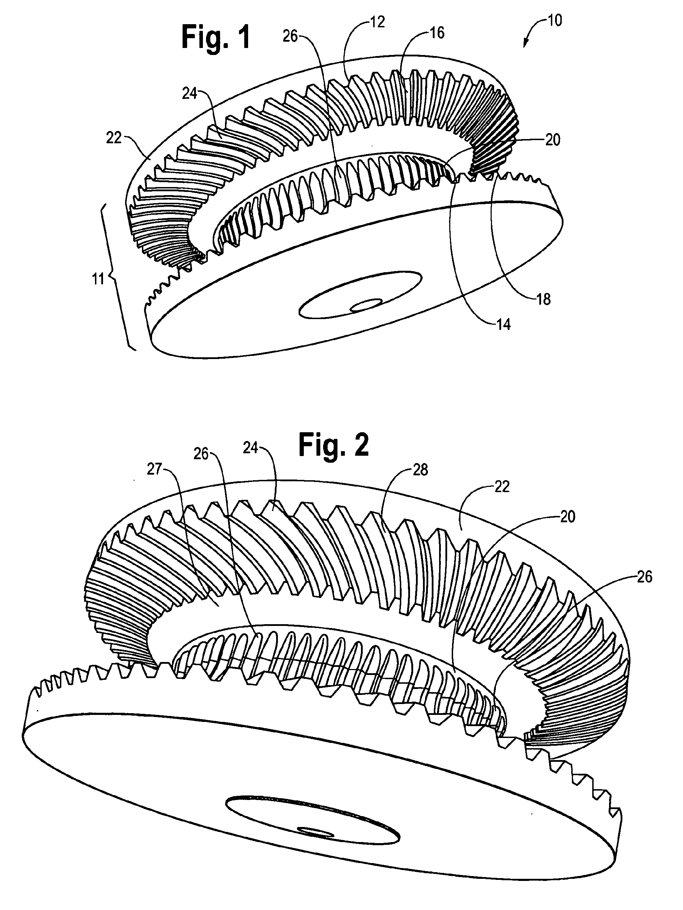

Referring now to the figures and in particular to Fig. 1, there is illustrated a hybrid enveloping spiroid and worm gear (the gear assembly 10) embodying the principles of the present invention. The gear assembly 10 is a double gear 11 in which two facing (opposing) surfaces 12, 14 have gear teeth 16, 18 formed therein. The assembly 10 includes a central hub region 20 that interconnects the opposing gears surfaces 12, 14.

The opposing gear surfaces 12, 14 have teeth 16, 18 that extend from the periphery 22, partially downward toward the central hub region 20. In a present hybrid spiroid and worm gear 10, the opposing surfaces 12, 14 are formed with a spiroid gear form 24 and the central hub portion 20 is formed with a worm gear form 26. A gap 27 is defined between the spiroid 24 and worm 26 gear forms. The spiroid gear form 24 has a curved tooth profile as indicated at 28. In the illustrated embodiment, the worm gear 26 has lower gear tooth profile. It will, however, be appreciated that the worm gear 26 tooth profile can be the same as the spiroid 24 profile insofar as the pitch, tooth height and like tooth characteristics.

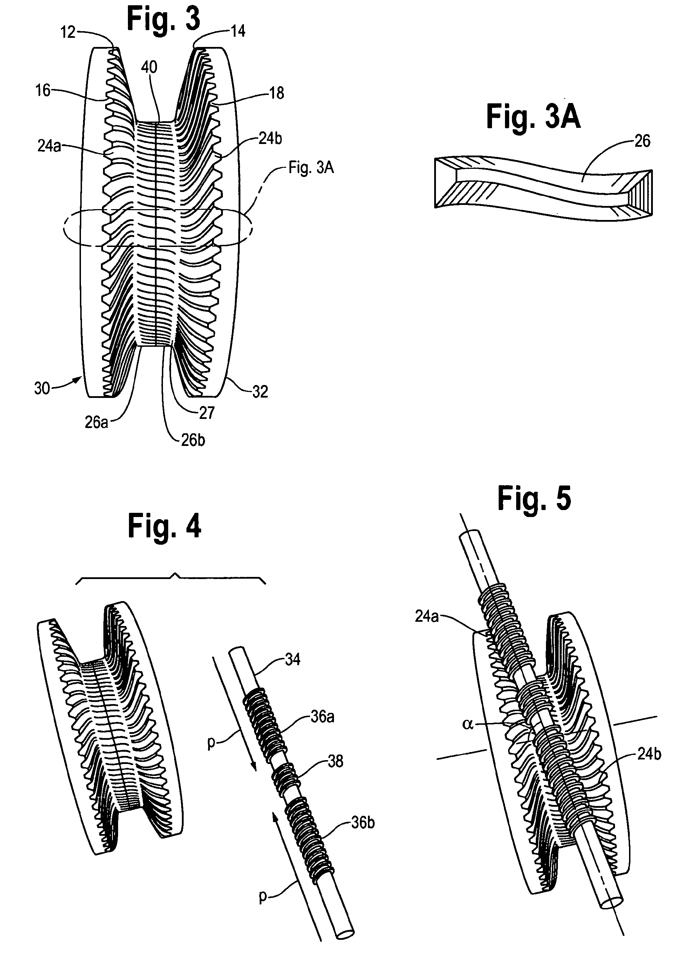

Referring to FIG. 3, the assembly 10 is formed as a pair of elements 30, 32, each element having the spiroid face gear face or profile 24 and one-half 26a,b of the worm gear 26 profile. The two elements 30, 32, which are defined by a parting line 40 in the gear assembly 10, are then joined to one another (e.g., by press-fitting, welding, adhesive, fasteners or the like) to form the double gear element 11. In a present element 11, the two half-gear elements 30, 32 each include one-half of the worm gear 26 so that a single gear profile (and, for example, a single gear mold) can be used for each element or half 30, 32.

The illustrated gear system (the gear assembly 10 and a pinion 34) has a pinion 34 that has two different and separate tooth profiles 36, 38. Two outer pinion (worm) tooth profiles 36 are designed to engage the larger opposing spiroid gear profiles 24, while the inner pinion (worm) tooth profile 38 is designed to engage the central worm gear tooth profile 26. It will, however, be appreciated that the pinion 34 can be configured with a single tooth (worm pinion) profile and can also be formed having a continuous tooth profile along the length of the pinion. Alternately, the pinion can be formed tapering (with a decreasing diameter) toward the center of the pinion from the ends, as indicated at P in FIG. 4. The illustrated pinion is formed from metal, but, of course can be formed from other suitable materials.

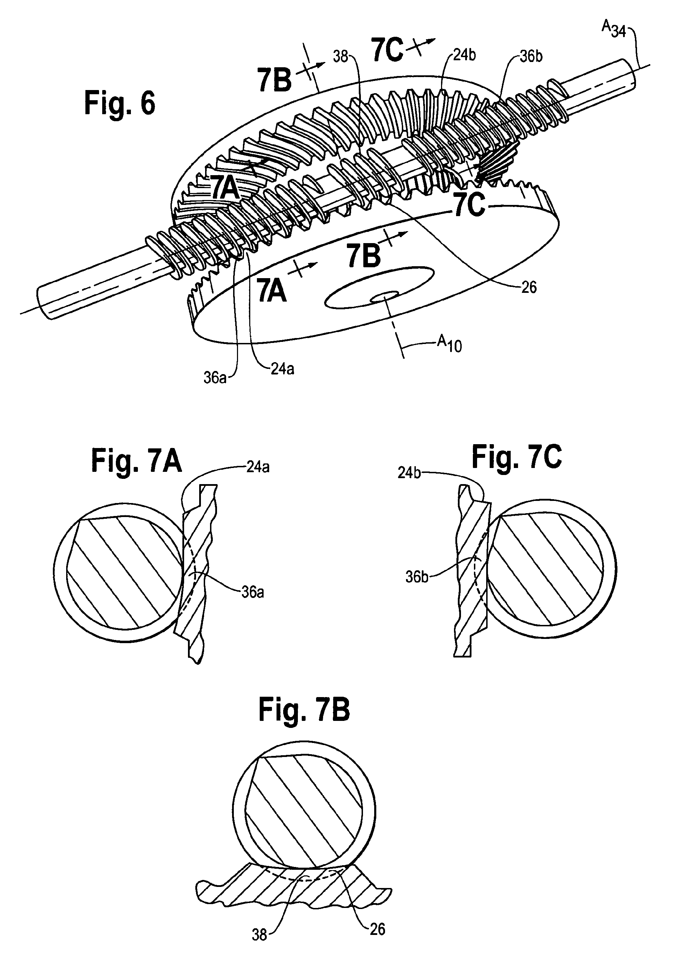

As seen in Figs. 4-8, the present enveloping spiroid and worm gear assembly 10 uses a pinion 34 that has an axis A₃₄ that is skewed (at skew angle α) relative to the axis A₁₀ of the gear assembly 10. In this manner, a first portion 36a of the pinion 34 rests again one of the spiroid gear faces 24a while a second (or other) portion 36b of the pinion 34 rests against the other spiroid gear face 24b. And, the central portion 38 of the pinion 34 engages the central worm gear formation 26.

Tests were conducted to compare the torque capability of the hybrid gear to that of a double spiroid gear (without the central worm gear) and a worm gear. This was conducted by measuring the maximum torque at failure which was determined to be when the gear teeth fail under applied torque.

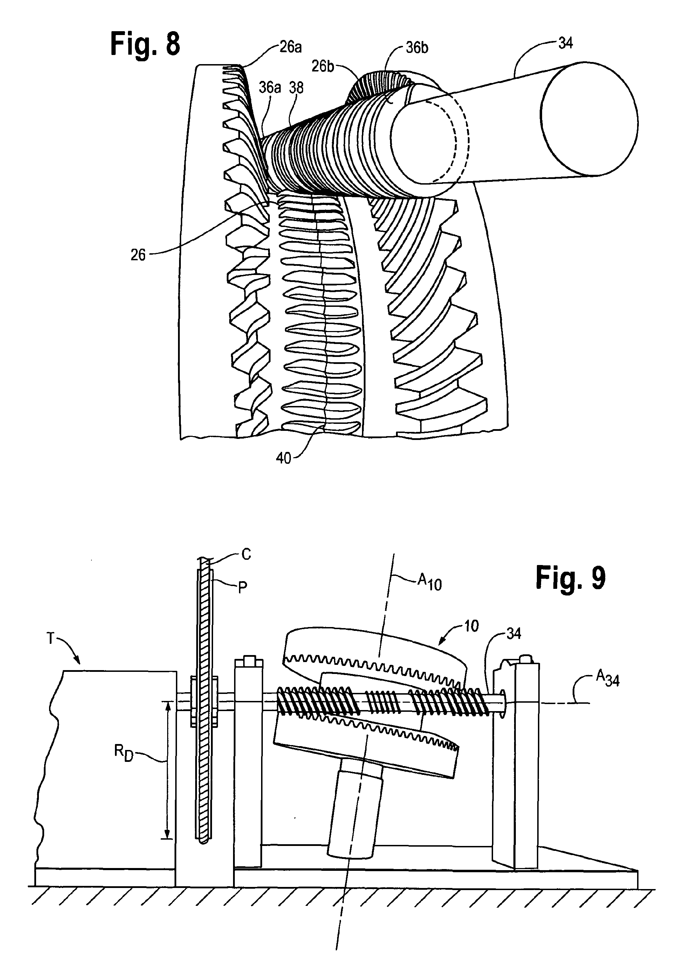

Testing was carried out using an ITW Instron device T as illustrated, in part, in Fig. 9. The test gear 10 was held in a fixed position and an input torque was applied to rotate the pinion 34. The pinion shaft was linked to the center of a 5 inch diameter disk D. The input torque on the pinion was provided by a steel cord, and was determined to be equal to the force exerted on the disk by the cord C engaging the periphery P of the disk D and rotating the disk D, multiplied by the radius of disk r_{D} which is 2.5 inches.

The force was increased slowly until the gear teeth failed.

Three sets of test were conducted. The first set of tests was carried out on three worm gear samples. The calculated results of the test are shown in Table 1, below, which show the maximum load indicated for the worm gear.

The second set of tests was carried out on six double spiroid gear samples. The calculated results of the test are shown in Table 2, below, which show the maximum load indicated for the double spiroid gears.

The third set of tests was carried out on six hybrid enveloping spiroid and worm gear samples. The calculated results of the test are shown in Table 3, below, which show the maximum load indicated for the hybrid spiroid and worm gear.

**TABLE 1- MAXIMUM TESTED LOAD FOR WORM GEAR**

| Sample No. | Maximum Load (lbf) | Load at Break (Standard) (lbf) | Energy at Break (Standard) (ft-lbf) | Load at Preset Point (Tensile extension 0.5 in) (lbf) |
|---|---|---|---|---|
| 1 | 15.31 | 9.13 | 4.57 | 3.84 |
| 2 | 14.15 | 9.21 | 3.29 | 4.11 |
| 3 | 14.45 | 9.54 | 3.46 | 3.61 |

**TABLE 2 - MAXIMUM TESTED LOAD FOR DOUBLE SPIROID GEAR**

| Sample No. | Maximum Load (lbf) | Load at Break (Standard) (lbf) | Energy at Break (Standard) (ft-lbf) | Load at Preset Point (Tensile extension 0.5 in) (lbf) |
|---|---|---|---|---|
| 1 | 70.06 | 62.25 | 22.75 | 5.82 |
| 2 | 76.09 | 65.24 | 24.11 | 3.88 |
| 3 | 75.21 | 66.20 | 24.14 | 4.44 |
| 4 | 76.14 | 66.75 | 24.01 | 7.27 |
| 5 | 72.66 | 60.23 | 22.90 | 6.26 |
| 6 | 72.06 | 62.10 | 22.62 | 9.36 |

**TABLE 3 - MAXIMUM TESTED LOAD FOR HYBRID SPIROID AND WORM GEAR**

| Sample No. | Maximum Load (lbf) | Load at Break (Standard) (lbf) | Energy at Break (Standard) (ft-lbf) | Load at Present Point (Tensile extension 0.5 in) (lbf) |
|---|---|---|---|---|
| 1 | 81.46 | 68.35 | 30.16 | 5.72 |
| 2 | 79.91 | 63.70 | 28.13 | 6.56 |
| 3 | 84.21 | 68.96 | 30.86 | 5.16 |
| 4 | 84.82 | 70.35 | 30.41 | 5.35 |
| 5 | 81.68 | 61.66 | 27.94 | 2.14 |
| 6 | 88.80 | 74.40 | 33.03 | 4.04 |

In each case, the maximum load was calculated as the test device force multiplied by the disk radius (2.5 inches) and multiplied by the RPM ratio of 19. The RPM ratio is the ratio of rotational speed of the pinion to the tested gear. Thus, the maximum load is calculated as the test device force (in pounds) multiplied by 47.5 inches. All of the gears were made from the same material, Acetal 100.

With respect to the worm gear, the average (of three samples) maximum load at failure for the three tests was found to be 14.64 lbs, which corresponds to an average torque limit for the worm gear of 14.64x2.5x19=694.4 in-lbs.

With respect to the double spiroid gear samples, the average (of six samples) maximum load at failure was found to be 73.7 lbs. This corresponds to an average torque limit for the double spiroid gear of 73.7x2.5x19=3500.75 in-lbs.

And with respect to hybrid spiroid and worm gear samples, the average (of six samples) maximum load at failure was found to be 83.48 lbs. This corresponds to an average torque limit for the hybrid spiroid and worm gear of 83.48x2.5x19=3965.3 in-lbs.

As can be seen from the test results, the maximum load of the present hybrid gear, compared to that of similar size and material gears is considerably higher than the comparable worm gear (over 470 percent) and higher than the comparable double spiroid gear (13.3 percent). Thus, the present hybrid spiroid worm gear has been found to provide a significant increase in torque capability for gearing, without increasing the size of the gears.

It will be understood by those skilled in the art that the present hybrid enveloping spiroid and worm gear assembly 10 permits a gear application in those instances where high torque handling is required and a physically small gear set is needed. Importantly, it has been found that the present hybrid enveloping spiroid and worm gear assembly 10 can be formed from polymeric (e.g., plastic, resin) materials and still withstand high or out of the ordinary loads such as thrust loads (longitudinally along the pinion or normal to the gear assembly axis), without stripping the gear teeth 16, 18. It has also been found that higher torque loads can he accommodated since the load is distributed over both the spiroid gear surfaces 24, as well as the worm gear 26.

Although not exhaustive nor limiting, it is anticipated that the present hybrid enveloping spiroid and worm gear system 10 can be used in (medical) pump and valve applications, aerospace systems and robotics applications, automobile and transportation systems, power systems, wind energy, mining systems, as well as general manufacturing uses.

All patents referred to herein, are hereby incorporated herein by reference, whether or not specifically done so within the text of this disclosure.

In the disclosures, the words "a" or "an" are to be taken to include both the singular and the plural. Conversely, any reference to plural items shall, where appropriate, include the singular.

## Claims

1. A hybrid spiroid and worm gear comprising:
a gear body (10) having an axis of rotation, the gear body (10) having a plurality of spiroid gear teeth (16, 18) formed in a surface (12, 14) of the body (10), formed generally radially relative to the axis of rotation, the gear body further having a plurality of worm gear teeth (26) formed in the body separate and apart from the spiroid teeth (16, 18), the worm gear teeth (26) formed generally longitudinally relative to the axis of rotation,
**characterized in that**
the gear body (10) has pair of substantially opposing surfaces (12, 14) and wherein spiroid gear teeth (16, 18) are formed in the opposing surfaces, and wherein the worm gear teeth (26) are formed between the opposing surfaces.

2. The hybrid spiroid and worm gear in accordance with claim 1 wherein the worm gear teeth (26) are formed in a central hub portion (20) of the body (10) inwardly of the spiroid gear teeth (16, 18).

3. The hybrid spiroid and worm gear in accordance with anyone of claims 1 or 2, wherein the body (10) defines a gap (27) between the spiroid gear teeth (16, 18) and the worm gear teeth (26).

4. The hybrid spiroid and worm gear in accordance with anyone of claims 1 to 3 wherein the gear body (10) is formed as two parts (30, 32) joined to one another at the hub (20).

5. The hybrid spiroid and worm gear in accordance with claim 4 wherein the two parts (30, 32) are substantially identical to one another.

6. The hybrid spiroid and worm gear in accordance with claim 4 or 5 wherein the two parts (30, 32) are joined by press-fitting, welding, adhesive or fasteners.

7. The hybrid spiroid and worm gear in accordance with anyone of claims 1 to 6, wherein the worm gear teeth (26) are formed having a profile that is different from a profile of the spiroid gear teeth (16, 18), or wherein the worm gear teeth are formed having a profile that is substantially the same as a profile of the spiroid gear teeth.

8. The hybrid spiroid and worm gear in accordance with anyone of claims 1 to 7 wherein the gear is formed from a polymeric material.

9. The hybrid spiroid and worm gear in accordance with claim 8 wherein the polymeric material is an acetal.

10. The hybrid spiroid and worm gear in accordance with anyone of claims 1 to 9, wherein the spiroid gear teeth (16, 18) in the opposing surfaces (12, 14) are configured to mesh with a pinion (34) disposed at an angle that is other than normal to an axis of the gear body (10).

11. The hybrid spiroid and worm gear in accordance with claim 10, wherein the pinion (34) is formed with first and third spaced apart thread forms (36a,b) configured to mesh with the spiroid gear teeth (16, 18) and an intermediately disposed, second thread form (38) configured to mesh with the worm gear teeth (26), wherein the pinion (34) first and third thread forms (36a,b) are identical.

12. The hybrid spiroid and worm gear in accordance with claim 11 wherein the second thread form (38) is identical to the first and third thread forms (36a,b), wherein the first, second and third thread forms are formed as a continuous thread form in the pinion (34).

13. The hybrid spiroid and worm gear in accordance with claim 11 or 12 wherein the pinion (34) is tapered, having a reduced diameter toward the second thread form (38).

14. A method of forming a hybrid spiroid and worm gear, the gearing having a gear body (10) formed as first and second parts (30, 32) and having an axis of rotation, the gear body having a pair of substantially opposing surfaces (12, 14), the opposing surfaces having a plurality of spiroid gear teeth (16, 18) formed there generally radially relative to the axis of rotation, the gear body (10) further having a central hub portion (20) between and connecting the opposing surfaces (12, 14), the central hub (20) portion having a plurality of worm gear teeth (26) formed therein, separate and apart from the spiroid teeth (16, 18), the worm gear teeth (26) formed generally longitudinally relative to the axis of rotation, the body (10) defining a gap (27) between the spiroid gear teeth (16, 18) and the worm gear teeth (26), the method comprising:
forming the first gear body part (30);
forming the second gear body part (32); and
joining the first and second gear body parts (30, 32) to form the hybrid spiroid and worm gear.

## Patentansprüche

1. Hybrid-Spiroid- und Schneckengetriebe, aufweisend:
einen Getriebekörper (10) mit einer Drehachse, wobei der Getriebekörper (10) mehrere Spiroidgetriebezähne (16, 18) hat, die in einer Fläche (12, 14) des Körpers (10) gebildet sind, die im Allgemeinen radial relativ zur Drehachse gebildet sind, wobei der Getriebekörper ferner mehrere Schneckengetriebezähne (26) hat, die in dem Körper separat und getrennt von den Spiroidzähnen (16, 18) gebildet sind, wobei die Schneckengetriebezähne (26) im Allgemeinen in Längsrichtung relativ zur Drehachse gebildet sind,
**dadurch gekennzeichnet, dass**
der Getriebekörper (10) zwei im Wesentlichen gegenüberliegende Flächen (12, 14) hat und wobei Spiroidgetriebezähne (16, 18) in den gegenüberliegenden Flächen gebildet sind, und wobei die Schneckengetriebezähne (26) zwischen den gegenüberliegenden Flächen gebildet sind.

2. Hybrid-Spiroid- und Schneckengetriebe nach Anspruch 1, wobei die Schneckengetriebezähne (26) in einem zentralen Nabenabschnitt (20) des Körpers (10) innerhalb der Spiroidgetriebezähne (16, 18) gebildet sind.

3. Hybrid-Spiroid- und Schneckengetriebe nach einem der Ansprüche 1 oder 2, wobei der Körper (10) einen Spalt (27) zwischen den Spiroidgetriebezähnen (16, 18) und den Schneckengetriebezähnen (26) definiert.

4. Hybrid-Spiroid- und Schneckengetriebe nach einem der Ansprüche 1 bis 3, wobei der Getriebekörper (10) in zwei Teilen (30, 32) gebildet ist, die an der Nabe (20) miteinander verbunden sind.

5. Hybrid-Spiroid- und Schneckengetriebe nach Anspruch 4, wobei die zwei Teile (30, 32) im Wesentlichen miteinander identisch sind.

6. Hybrid-Spiroid- und Schneckengetriebe nach Anspruch 4 oder 5, wobei die zwei Teile (30, 32) durch Presspassung, Schweißen, Kleben oder Befestigungsmittel verbunden sind.

7. Hybrid-Spiroid- und Schneckengetriebe nach einem der Ansprüche 1 bis 6, wobei die Schneckengetriebezähne (26) mit einem Profil gebildet sind, das sich von einem Profil der Spiroidgetriebezähne (16, 18) unterscheidet, oder wobei die Schneckengetriebezähne mit einem Profil gebildet sind, das im Wesentlichen dasselbe wie das Profil der Spiroidgetriebezähne ist.

8. Hybrid-Spiroid- und Schneckengetriebe nach einem der Ansprüche 1 bis 7, wobei das Getriebe aus einem polymeren Material gebildet ist.

9. Hybrid-Spiroid- und Schneckengetriebe nach Anspruch 8, wobei das polymere Material Acetal ist.

10. Hybrid-Spiroid- und Schneckengetriebe nach einem der Ansprüche 1 bis 9, wobei die Spiroidgetriebezähne (16, 18) in den gegenüberliegenden Flächen (12, 14) so gestaltet sind, dass sie in eine Ritzelstange (34) greifen, die in einem Winkel angeordnet ist, der anders als normal zu einer Achse des Getriebekörpers (10) ist.

11. Hybrid-Spiroid- und Schneckengetriebe nach Anspruch 10, wobei die Ritzelstange (34) mit ersten und dritten beabstandeten Gewindeformen (36a,b) gebildet ist, die so gestaltet sind, dass sie in die Spiroidgetriebezähne (16, 18) greifen, und einer dazwischen angeordneten zweiten Gewindeform (38), die so gestaltet ist, dass sie in die Schneckengetriebezähne (26) greift, wobei die ersten und dritten Gewindeformen (36a,b) der Ritzelstange (34) identisch sind.

12. Hybrid-Spiroid- und Schneckengetriebe nach Anspruch 11, wobei die zweite Gewindeform (38) mit den ersten und dritten Gewindeformen (36a,b) identisch ist, wobei die ersten, zweiten und dritten Gewinde als Endlosgewindeform in der Ritzelstange (34) gebildet sind.

13. Hybrid-Spiroid- und Schneckengetriebe nach Anspruch 11 oder 12, wobei die Ritzelstange (34) konisch ist, mit einem verringerten Durchmesser zur zweiten Gewindeform (38).

14. Verfahren zur Herstellung eines Hybrid-Spiroid- und Schneckengetriebes, wobei das Getriebe einen Getriebekörper (10) aufweist, der aus einem ersten und zweiten Teil (30, 32) gebildet ist und eine Drehachse hat, wobei der Getriebekörper zwei im Wesentlichen gegenüberliegende Flächen (12, 14) hat, wobei in den gegenüberliegenden Flächen mehrere Spiroidgetriebezähne (16, 18) im Allgemeinen radial relativ zur Drehachse gebildet sind, wobei der Getriebekörper (10) des Weiteren einen zentralen Nabenabschnitt (20) hat, der zwischen den gegenüberliegenden Flächen (12, 14) liegt und diese verbindet, wobei in dem zentralen Nabenabschnitt (20) mehrere Schneckengetriebezähne (26) separat und getrennt von den Spiroidzähnen (16, 18) gebildet sind, wobei die Schneckengetriebezähne (26) im Allgemeinen in Längsrichtung relativ zur Drehachse gebildet sind, wobei der Körper (10) einen Spalt (27) zwischen den Spiroidzähnen (16, 18) und den Schneckengetriebezähnen (26) definiert, wobei das Verfahren Folgendes aufweist:
Bilden des ersten Teils (30) des Getriebekörpers;
Bilden des zweiten Teils (32) des Getriebekörpers; und
Verbinden des ersten und zweiten Teils (30, 32) des Getriebekörpers zur Bildung des Hybrid-Spiroid- und Schneckengetriebes.

## Revendications

1. Engrenage à vis sans fin et spiroïde hybride comprenant :
un corps d'engrenage (10) ayant un axe de rotation, le corps d'engrenage (10) ayant une pluralité de dents d'engrenage spiroïde (16, 18) formées dans une surface (12, 14) du corps (10), formées généralement radialement par rapport à l'axe de rotation, le corps d'engrenage ayant en outre une pluralité de dents d'engrenage à vis sans fin (26) formées dans le corps séparément et à distance des dents spiroïdes (16, 18), les dents d'engrenage à vis sans fin (26) étant formées généralement longitudinalement par rapport à l'axe de rotation,
**caractérisé en ce que**
le corps d'engrenage (10) a une paire de surfaces substantiellement opposées (12, 14) et
des dents d'engrenage spiroïde (16, 18) étant formées dans les surfaces opposées, et
les dents d'engrenage à vis sans fin (26) étant formées entre les surfaces opposées.

2. Engrenage à vis sans fin et spiroïde hybride selon la revendication 1, dans lequel les dents d'engrenage à vis sans fin (26) sont formées dans une portion de moyeu centrale (20) du corps (10) à l'intérieur des dents d'engrenage spiroïde (16, 18).

3. Engrenage à vis sans fin et spiroïde hybride selon l'une quelconque des revendications 1 ou 2, dans lequel le corps (10) définit un espace (27) entre les dents d'engrenage spiroïde (16, 18) et les dents d'engrenage à vis sans fin (26).

4. Engrenage à vis sans fin et spiroïde hybride selon l'une quelconque des revendications 1 à 3, dans lequel le corps d'engrenage (10) est formé sous forme de deux parties (30, 32) réunies l'une à l'autre au niveau du moyeu (20).

5. Engrenage à vis sans fin et spiroïde hybride selon la revendication 4, dans lequel les deux parties (30, 32) sont substantiellement identiques l'une à l'autre.

6. Engrenage à vis sans fin et spiroïde hybride selon la revendication 4 ou 5, dans lequel les deux parties (30, 32) sont réunies par ajustement serré, soudage, par adhésif ou par des attaches.

7. Engrenage à vis sans fin et spiroïde hybride selon l'une quelconque des revendications 1 à 6, dans lequel les dents d'engrenage à vis sans fin (26) sont formées avec un profil qui est différent d'un profil des dents d'engrenage spiroïde (16, 18) ou dans lequel les dents d'engrenage à vis sans fin sont formées avec un profil qui est substantiellement le même que le profil des dents d'engrenage spiroïde.

8. Engrenage à vis sans fin et spiroïde hybride selon l'une quelconque des revendications 1 à 7, dans lequel l'engrenage est formé d'un matériau polymère.

9. Engrenage à vis sans fin et spiroïde hybride selon la revendication 8, dans lequel le matériau polymère est un acétal.

10. Engrenage à vis sans fin et spiroïde hybride selon l'une quelconque des revendications 1 à 9, dans lequel les dents d'engrenage spiroïde (16, 18) dans les surfaces opposées (12, 14) sont configurées de manière à s'engrener avec un pignon (34) disposé suivant un angle différent de normal à un axe du corps d'engrenage (10).

11. Engrenage à vis sans fin et spiroïde hybride selon la revendication 10, dans lequel le pignon (34) est formé avec des première et troisième formes de filets espacées (36a,b) configurées pour s'engrener avec les dents d'engrenage spiroïde (16, 18) et une deuxième forme de filet (38) disposée entre elles, configurée pour s'engrener avec les dents d'engrenage à vis sans fin (26), les première et troisième formes de filet (36a,b) du pignon (34) étant identiques.

12. Engrenage à vis sans fin et spiroïde hybride selon la revendication 11, dans lequel la deuxième forme de filet (38) est identique à la première et à la troisième forme de filet (36a,b), les première, deuxième et troisième formes de filet étant formées sous forme de forme de filet continue dans le pignon (34).

13. Engrenage à vis sans fin et spiroïde hybride selon la revendication 11 ou 12, dans lequel le pignon (34) est conique, ayant un diamètre réduit vers la deuxième forme de filet (38).

14. Procédé pour former un engrenage à vis sans fin et spiroïde hybride, le système d'engrenage ayant un corps d'engrenage (10) formé sous forme de première et deuxième parties (30, 32) et ayant un axe de rotation, le corps d'engrenage ayant une paire de surfaces substantiellement opposées (12, 14), les surfaces opposées ayant une pluralité de dents d'engrenage spiroïde (16, 18) formées sur celles-ci, généralement radialement par rapport à l'axe de rotation, le corps d'engrenage (10) ayant en outre une portion de moyeu central (20) entre les surfaces opposées (12, 14) et reliant ces dernières, la portion de moyeu central (20) ayant une pluralité de dents d'engrenage à vis sans fin (26) formées dans celle-ci, séparément et à distance des dents spiroïdes (16, 18), les dents d'engrenage à vis sans fin (26) étant formées généralement longitudinalement par rapport à l'axe de rotation, le corps (10) définissant un espace (27) entre les dents d'engrenage spiroïde (16, 18) et les dents d'engrenage à vis sans fin (26), le procédé comprenant :
former la première partie de corps d'engrenage (30) ;
former la deuxième partie de corps d'engrenage (32) ; et
joindre la première et la deuxième partie de corps d'engrenage (30, 32) pour former l'engrenage à vis sans fin et spiroïde hybride.
